# EUROPEAN PATENT APPLICATION

(11) **EP 4 140 801 A1**
(43) Date of publication of application: **01.03.2023**
(21) Application number: 22190825.4
(22) Date of filing: 17.08.2022
(51) Int. Cl.: B60L 53/16, B60L 53/62

(54) **AN ADAPTER, SYSTEM AND ARRANGEMENT FOR MONITORING THE BATTERY OF AN ELECTRIC VEHICLE**

(30) Priority: 23.08.2021 NL 2029022
(71) Applicant: Adams, Ralf Arnoldus Antonius, 5071 CS Udenhout (NL); Wijnans, Hendricus Johannes Bernardus, 5071 AL Udenhout (NL)
(72) Inventor: ADAMS, Ralf Arnoldus Antonius, 5071 CS Udenhout (NL); WIJNANS, Hendricus Johannes Bernardus, 5071 AL Udenhout (NL); HUIJDING, Eric Coenraad, Udenhout (NL)
(74) Representative: Octrooibureau Los en Stigter B.V.

(57) **Abstract**

An adapter for electric vehicles characterized in that the adapter comprising a body defining a first connector portion for connecting to a head of a charging cable of a charging station, and defining a second connector portion for connecting to a charging port of an electric vehicle, so that the station and vehicle are simultaneously connectable to the adapter, wherein the adapter designed for allowing an electrical and communicative connection to extend between the vehicle and the charging station through the adapter, wherein the adapter comprises a processing unit arranged for communicating with the vehicle over said communicative connection for receiving information about the battery of the vehicle, and wherein the adapter comprises at least one wireless transmitter (15, 16, 17) arranged for transmitting at least one signal (S1, S2, S3) in response to the processing unit determining the information to be indicative of a battery malfunction. A system comprising the adapter, and an arrangement.

## Description

Perhaps one of the most significant drawbacks of using Lithium-ion batteries in electric vehicles is that they are required to operate in a relatively narrow temperature range. The battery cells' safety and stability highly depend on maintaining internal temperatures within specific limits. If the temperature exceeds the critical level on either end, thermal runaway can occur, destroying the battery or, even worse, starting a fire. Thermal runaway is a chain reaction within a battery cell that can be nearly impossible to stop once it has started. Thermal runaway begins when the heat generated within a battery exceeds the amount of heat that is dissipated to its surroundings. If the cause of excessive heat creation is not remedied, the condition will worsen rapidly. Internal battery temperature will continue to rise, causing battery current to rise, creating a domino effect. The rise in temperature in a single battery cell may even begin to affect other batteries in close proximity, and the pattern will propagate along the entire battery bank. During thermal runaway the battery cells may cause gassing of combustible materials which may lead to a fire that is so hot it can be nearly impossible to extinguish. While this is a problem in and of itself thermal runaway may also pose significant risk to the surroundings of the vehicle. In some instances homes were lost to battery fuelled fires. The problem is exacerbated in car lots and garages where electric vehicles are stationed in close proximity to each other. Thermal runaway in one vehicle may then propagate between vehicles. Garages and parking lots are increasingly more adept to electric vehicles and are starting to be provided with charging stations. Such garages tend to have a higher concentration of electric vehicles staying there for longer periods. As such, there exists a need to monitor vehicles charging at these locations for any sort of battery malfunction without fundamentally changing the infrastructure of the charging location. It is an aim of this invention to satisfy this need or at the very least provide an alternative to current vehicle monitoring systems.

According to a first aspect there is provided an adapter for electric vehicles comprising a body defining a first connector portion for connecting to a head of a charging cable of a charging station, and defining a second connector portion for connecting to a charging port of an electric vehicle (11), so that the station and vehicle are simultaneously connectable to the adapter. The adapter is designed for allowing an electrical and communicative connection to extend between the vehicle and the charging station through the adapter. *To this end the adapter may be provided with at least one electrically conductive pathway between the first connector portion and the second connector portion.* The adapter further comprises a processing unit arranged for communicating with the vehicle over said communicative connection, *such as via the at least one electrical conductive pathway extending through the body, for example over a control pilot connection line, or such as via a control pilot port of the charging port of the vehicle,* for receiving and processing information about the battery of the vehicle. The adapter comprises at least one wireless transmitter arranged for transmitting at least one signal, such as a warning signal, in response to the information being indicative of a predefined battery malfunction. *Such a battery malfunction could be a short circuit which may be determined from aberrant electrical battery behaviour such as by detecting a ground fault or leak current. Another example of a malfunction is the overheating of the battery which may be detected by measuring the battery temperature and finding the temperature to be above 80°C. Yet another malfunction may be the detection of a battery breach by detecting a gas such as hydrogen which comes into being through electrolysis of water. Any one of these malfunctions is also an early indication of imminent thermal runaway. Accordingly, the overarching malfunction that may be detected hereby is the imminent risk of thermal runaway.*

In a garage setting a vehicle may be hard to find, especially when the garage is crowded with other vehicles. It is therefore expedient to draw attention to the vehicle from passersby, alerting them to the fact that the vehicle has a malfunction. To this end the at least one wireless transmitter may comprise a light transmitter, such as an LED for sending out a light signal. Such a signal could be a strobing, blinking, or otherwise noteworthy light signal. The at least one signal would in such case only comprise said light signal. Alternatively, the at least one wireless transmitter comprises an audio transmitter, such as a speaker for sending out an audio signal. The at least one signal would in such case only comprise said sound signal. In yet another alternative the at least one wireless transmitter comprises a digital communication transmitter, such as a phone transmitter, a Bluetooth transmitter, a Wifi transmitter, a microwave transmitter, or a radio transmitter, for sending out a nonvisible electromagnetic signal. The at least one signal would in such case only comprise said nonvisible electromagnetic signal. The latter alternative allows users that are not in the immediate vicinity to be alerted, such as when the signal is received by a distant corresponding digital communication receiver. It is therefor beneficial to furnish the adapter such that the at least one wireless transmitter comprises a combination of a) the digital and the light transmitter; b) the digital and the audio transmitter; or c) the digital, the audio and the light transmitter. In any of these cases the least one signal would comprise the signals associated with each transmitter of the combination.

All electric vehicles are fitted with a battery management system, BMS, that regulates the charging process of the battery. The BMS is a known system and is the portion of the vehicle that monitors various aspects of the battery, such as temperature, the presence of a ground fault or a leakage current, and in some cases, it even is arranged to detect gasses such as hydrogen. Among other things the BMS uses this information to prevent the battery from overheating during the charging process by reducing the amount of electricity that is supplied to the battery, sometimes even preventing the charging of the battery. The BMS may communicate battery information with the charging station over the communicative connection to the charging station so that momentary electrical supply matches the momentary electrical demand. The adapter may be arranged the communicated information, or even directly analyse information such as a value on temperature, a value of a ground fault, a value of a leakage current, a value of detected gas such as hydrogen. The processing unit is in such an example arranged so that when at least one of these values exceeds a corresponding predetermined threshold the at least one wireless transmitter is instructed to send the at least one signal. A vehicle may also separately from this example be arranged so that the BMS allows access to its sensor information over the communicative connection, such as the control pilot (CP) port. It should be understood, also separately from this example that the information is refreshed continuously, such as every second, so that the adapter processes the information live. Live is to say without substantial delay. It is important for early detection of serious malfunctions that a signal is not sent minutes after emergency measures would have otherwise been effective.

In order to assess particular types of danger it may come in handy to get a read on the actual sensor data without having to go through the bother of accessing an app. This is particularly true in case there are electrical issues with the vehicle that might make the vehicle unsafe to touch. To this end a digital display may be arranged on the adapter to display the received information, such as 'electrical leak' or 'ground fault', or even display the measured battery temperature directly. In case of a detected electrical leak the display could display a warning not to touch the vehicle. Any technically skilled person responding to the at least one signal may then be more properly informed, and perhaps even be saved a whole deal of misery.

In some cases the BMS may send a signal over the communicative connection indicating a malfunction it itself has determined. The adapter may therefore be beneficially arranged for relaying a warning signal of a battery management system of the vehicle by instructing the at least one wireless transmitter to send the at least one signal in response to receiving a warning signal from the BMS.

Given the fact that the adapter mediates the electrical connection between vehicle and charging station the adapter may be arranged to leach electrical energy from the vehicle or station for powering the processing unit and wireless transmitter. However, this could potentially prevent the adapter from operating in certain circumstances, such as when the electrical connection between vehicle and station fails. It may therefor be additionally, or alternatively interesting to provide the adapter with an electrical power source, such as a battery, for powering the processing unit and the at least one wireless transmitter, and if present the digital display. This ensures operation under any circumstance. In the situation in which a light transmitter for sending a visible light signal is present this may be furnished within or on the handle so that the light signal is visible from afar.

In order to improve the ease of use of the adapter, the first portion may be defined at a first distal end of the body and the second portion is defined at a second distal end of the body. The body may then comprise a handle, such as with a grip, extending between the first portion and the second portion. In this manner the adapter may feel like an extension piece to a cable. In one example, in extension of the above the adapter may comprise a locking mechanism that allows a locking engagement between the second portion of the adapter and the charging cable. This locking mechanism may be designed to propagate a locking engagement between the firs portion of the adapter and the vehicle into a locking engagement of the second portion with the cable. The mechanism may alternatively be designed with a portion to reversibly lock the second portion of the adapter and the cable. In one example such a portion is a lock that is manually engageable by a key. The portion may also be designed so that unlocking the first portion from the vehicle and unlocking the second portion from the cable occurs simultaneously.

Herein before a digital communication transmitter was discussed as an option for sending a nonvisible electromagnetic signal, that is to say outside of the visible light spectrum. This same transmitter may be furnished as a sender-receiver for wirelessly communicating, such as through pairing, with a monitoring device, such as a phone, tablet, laptop or computer, for allowing a user to be alerted when the processing unit determines the information to be indicative of a predefined battery malfunction.

In one example, compatible with any and all embodiments of the invention, the adapter may comprise an 'on board diagnostic' connector, also known as an OBD-connector, such as an OBD-II connector for establishing the communicative connection instead. It is anticipated that future vehicles will be provided with an OBD-port near or at the charging port. The OBD-connector may therefor be provided to the second connector portion of the adapter and/or projecting from the body or any of the first and second connector portions of the adapter by a cord. In this example information is then communicated via the OBD-connector. OBD-connectors are an industry standard. SAE standards documents on OBD-II:
- J1962: Defines the physical connector used for the OBD-II interface.
- J1850: Defines a serial data protocol. There are 2 variants: 10.4 kbit/s (single wire, VPW) and 41.6 kbit/s (2 wire, PWM). Mainly used by US manufacturers, also known as PCI (Chrysler, 10.4K), Class 2 (GM, 10.4K), and SCP (Ford, 41.6K)
- J1978: Defines minimal operating standards for OBD-II scan tools
- J1979: Defines standards for diagnostic test modes
- J2012: Defines standards trouble codes and definitions.
- J2178-1: Defines standards for network message header formats and physical address assignments
- J2178-2: Gives data parameter definitions
- J2178-3: Defines standards for network message frame IDs for single byte headers
- J2178-4: Defines standards for network messages with three byte headers*
- J2284-3: Defines 500K CAN physical and data link layer
- J2411: Describes the GMLAN (Single-Wire CAN) protocol, used in newer GM vehicles. Often accessible on the OBD-connector as PIN 1 on newer GM vehicles. SAE standards documents on HD (Heavy Duty) OBD
- J1939: Defines a data protocol for heavy duty commercial vehicles

According to a second aspect of the invention there is provided a system for charging an electric vehicle comprising:
- an electric charging station;
- a charging cable for connecting said charging station, to an electric vehicle, wherein the cable comprises a head for connecting to a charging port of said electric vehicle;
- the adapter according to the first aspect of the invention and any option discussed herein before wherein the adapter is connected to the head of said charging cable with the first connector portion. Beneficially, such a system may further also comprise:
- a distant monitoring device, such as a computer, tablet, or phone, wherein the adapter comprises a digital communication transmitter for wirelessly communicating with said distant monitoring device, such as comprising a human interface, wherein the monitoring device is arranged so as to alert the user via the human interface when the processing unit determines the information to be indicative of a predefined battery malfunction.

In yet another option the system comprises multiple charging stations each electrically and communicatively connected to a vehicle via an adapter as previously discussed. In such a system a single distant monitoring device could be used to monitor multiple vehicles simultaneously. This would be particularly useful for crowded parking spaces in which many electric vehicles are charged at the same time.

In one example the system may comprise a response portion arranged for deploying a safety measure in response to the at least one signal. This response portion may be arranged over or adjacent to a parking space that is occupied by the vehicle. The deploying of a safety measure may be the spraying of foam, water or deploying a thermal isolation material so as to shield a surrounding of said parking space against the vehicle. In one specific example the response portion can be arranged for receiving the nonvisible electromagnetic signal of the digital communication transmitter. To this end the portion may be communicatively connected to the same Wifi network, phone network, or is simply in range for receiving a radio or microwave transmission.

According to a third aspect of the invention there is provided an arrangement for monitoring the battery of an electric vehicle at a charging station, characterized in that the arrangement comprises:
- a processing unit arranged for communicating with the vehicle over a communicative connection for receiving information about the battery of the vehicle, and wherein the arrangement comprises at least one wireless transmitter arranged for transmitting at least one signal in response to the processing unit determining the information to be indicative of a predefined battery malfunction, and wherein the arrangement is integrated with the charging cable, or the charging station. All aspects of the adapter, such as detailed in claims 2-6 may also apply to this arrangement. In one alternative embodiment, the arrangement may be integral with the vehicle.

Hereinafter the invention will be discussed in detail in reference to the following figures:
- Fig. 1 shows an adapter according to the invention
- Fig. 2 shows a system according to the invention
- Fig. 3 shows another system according to the invention;
- Fig. 4 shows an alternative system.

Wherever same reference numbers are used, reference is made to the same feature.

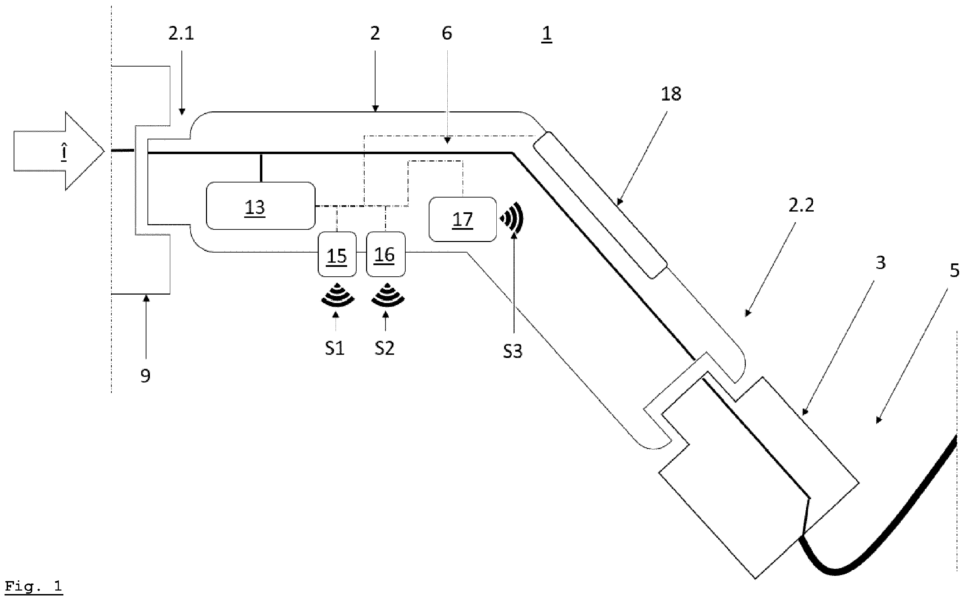

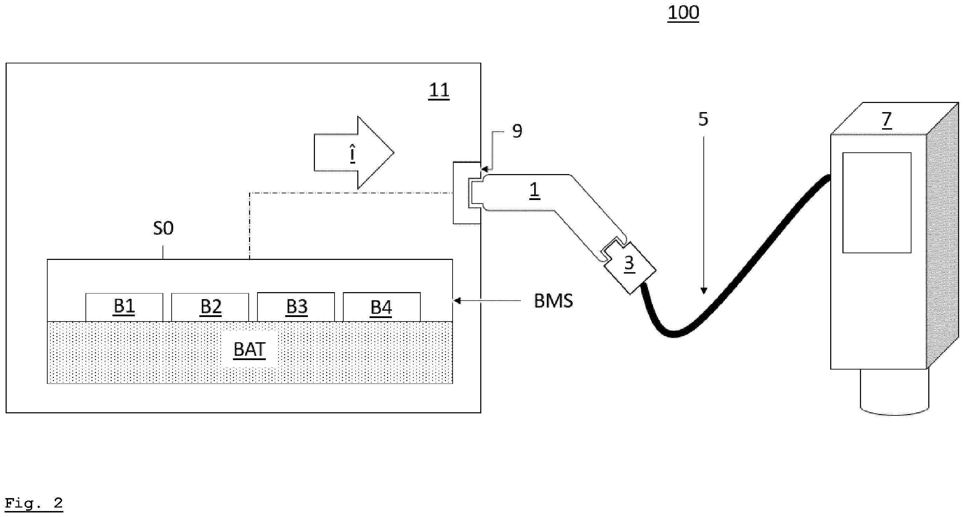

Figure 1 shows the adapter 1 according to the invention. It can be seen that the adapter 1 has a body 2 defining a first connection portion 2.1 at a first end for connecting to a head 3 of a charging cable 5 belonging to a charging station 7 shown in Figure 2. The body further defines a second connector portion 2.2 at a second end for connecting to a charging port 9 of an electric vehicle 11, also shown in Figure 2, so that the station 7 and vehicle 11 are simultaneously connectable to the adapter. The first portion is designed as a type 1, type 2, type 3, or tesla, connector plug. The second portion is designed as a socket corresponding to the plug. The adapter 1 is provided with internal conductive wiring 6 to form a conductive bridge between the first and second ends. In this example the first portion is a type 2, IEC 62196, connector plug, and the second is a type 2 connector socket. The conductive bridge links PP, CP, PE, N, L1, L2 and L3 portions of the plug with PP, CP, PE, N, L1, L2 and L3 portions of the socket. None of these portions are explicitly shown in any of the figures, but the person skilled in the art will understand how the conductive wiring can connect these parts. This wiring allows the adapter to extend an electrical and communicative connection between the vehicle 11and the charging station 7 through the body 2 of the adapter. The adapter further has a processing unit 13 arranged for communicating with the vehicle 11 over said same communicative connection for receiving information î about the battery of the vehicle. More specifically, the processing unit 13 is connected to the conductive wiring so as to communicate with the vehicle. The adapter also has at least one wireless transmitter 15, 16, 17 arranged for transmitting at least one signal S1, S2, S3 in response to the processing unit determining the information î to be indicative of a predefined battery malfunction. The information î is in this example gathered by the battery management system BMS of the vehicle shown in Figure 2. In this example the at least one transmitters consists of three different transmitters, namely an audio transmitter 15, a light transmitter 16, and a digital communication transmitter 17. In this example the audio transmitter is a speaker arranged for sending an audio signal S1. The light transmitter is an LED furnished in the handle arranged for sending a visible light signal S2. Lastly the digital communication transmitter 17 is a WiFi transmitter for sending a nonvisible electromagnetic signal S3 a monitoring device (not shown, but customary), such as a computer over the internet for allowing a user to be alerted when the processing unit determines the information to be indicative of a predefined battery malfunction. S1 and S2 are thus drawing attention to the vehicle in its immediate surrounding, while S3 is able to inform emergency services at a distance. Optionally, also separately from this example, the system may comprise a response device (not shown, but customary), such as a foaming agent dispenser, to mitigates thermal runaway.

Figure 2 shows a system 100 according to the invention. In this system a vehicle 11 and station 7 are connected for charging via the adapter 1. In order to explain the origin of the information that the adapter analyses attention is drawn to the vehicle 11. Here a battery management system BMS, also referred to as a battery management portion, manages the charging of a lithium-ion battery BAT of the vehicle. The BMS has, among other things a temperature sensor B1 for measuring the temperature of the battery. The BMS motors the temperature so as to regulate the electrical uptake of the battery so as to prevent the battery from overheating. The BMS may also have a sensor B2 for detecting a ground fault, a sensor B3 for detecting a leakage current, and a sensor B4 for detecting off-gassing, such as hydrogen, of a Lithium-ion battery. Such off-gassing usually occurs due to a breakdown of a Li-ion battery cell electrolyte as a result of a pressure build up inside the cell. The BMS may be programmed so that sensor information becomes accessible through the CP portion (not shown, but customary) of the charging port 9 of the vehicle. In this example this sensor information is the information î as received by the processing unit 13 of the adapter 1. Naturally, the BMS may itself also generate a warning signal S0. Such a signal is usually communicated to appliances that are electrically dependent on the battery. A charging station would not be such a device. However, the processing unit may request the BMS to forward such a signal when such a signal is generated. Additionally or alternatively this signal S0 can be communicated as part of information î through the CP portion of the charging port 9. In essence the processing unit would analyse incoming signal S0 and instruct transmitters 15, 16 and 17 to generate signals S1, S2 and S3 in response. In this example though the processing unit 13 is merely arranged for analysing the received information î which consists of a value of a temperature, a value of a ground fault, a value of a leakage current, a value of detected gas. In response to the temperature value exceeding 80°C signals S1, S2 and S3 are triggered by the processing unit 13. In case leak current is detected at all, or a ground fault the processor does the same and the S1 signal may even vocalize an audible warning to not touch the vehicle. It is also possible for the adapter to have a digital display 18 arranged to display a warning text or at least one value based on the received information î, such as the battery temperature or a warning not to touch the vehicle depending on which situation applies. The analysis can thus be based on a fairly straight forward logic programming.

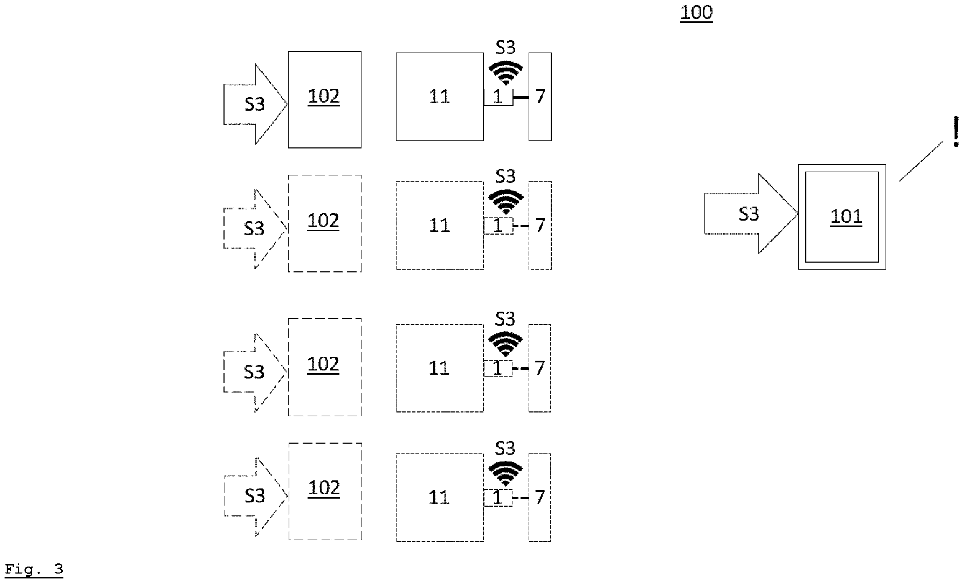

Figure 3 shows the system 100 according to the invention wherein a distant monitoring device 101, such as a computer, is optionally connected to a plurality of adapters, such as via the internet. These adapters would each be associated with a different vehicle. Thus multiple vehicles may be simultaneously monitored from the monitoring device 101. Additional vehicles and adapters are shown in dotted lines as to indicate their optionality. In this example the adapter 1 uses the same digital communication transmitter 17 for wirelessly communicating with said distant monitoring device 101, wherein the monitoring device is arranged so as to alert the user via a human interface associated therewith when the processing unit determines the information to be indicative of a predefined battery malfunction. Also visible in Figure 3 is the optional response portion 102 which is arranged for deploying safety measures in response to the at least one digital signal. Also separately from this example, the response portion may be designed so as to also be able to deploy safety measures in response to a deployment command from the monitoring device 101. The human interface of the monitoring device is arranged to allow the user to send said deployment command to the response portion 102.

It should be noted that the adapter may alternatively also be plugged into a charging port with its second connector portion 2.2, instead of into the charging port of the vehicle. In such instances the cable 5 would be connected to the vehicle at its other end, the end not comprising the plug.

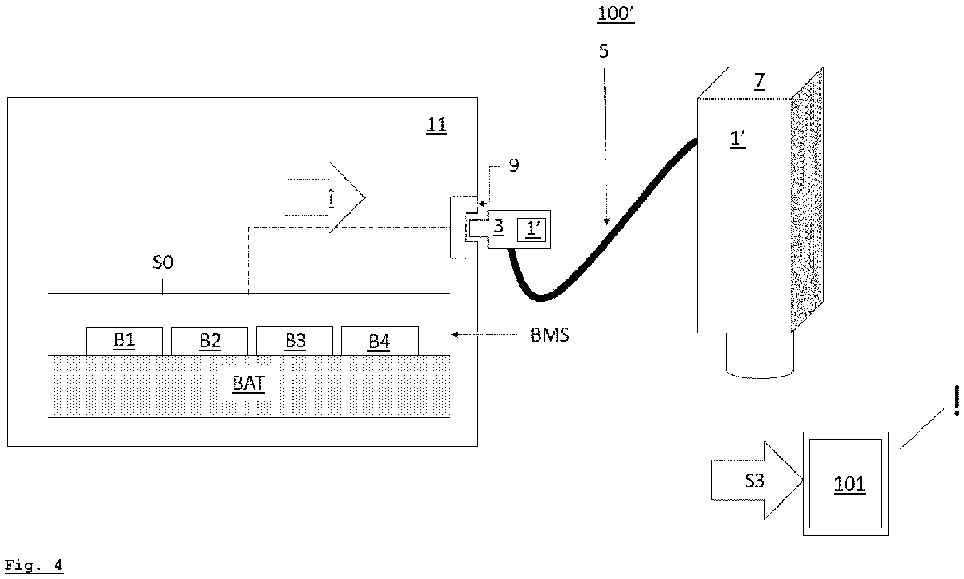

Figure 4 shows an alternative system 100' with respect to the system according to Figure 2. Hereinafter only differences with respect to the system 100 of Figure 3 will be discussed. In this example the adapter 1 is substituted by an arrangement which is now integral with the head 3 of the cable.

Although the invention has been discussed in the foregoing with reference to an exemplary embodiment of the method of the invention, the invention is not restricted to this particular embodiment which can be varied in many ways without de-parting from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. An adapter (1) for electric vehicles **characterized in that** the adapter comprising a body (2) defining a first connector portion (2.1) for connecting to a head (3) of a charging cable (5) of a charging station (7), and defining a second connector portion (2.2) for connecting to a charging port (9) of an electric vehicle (11), so that the station (7) and vehicle (11) are simultaneously connectable to the adapter, wherein the adapter (1) is designed for allowing an electrical and communicative connection to extend between the vehicle (11) and the charging station (7) through the adapter (1), wherein the adapter comprises a processing unit (13) arranged for communicating with the vehicle (11) over said communicative connection for receiving information about the battery of the vehicle, and wherein the adapter comprises at least one wireless transmitter (15, 16, 17) arranged for transmitting at least one signal (S1, S2, S3) in response to the processing unit determining the information to be indicative of a battery malfunction.

2. The adapter according to claim 1, wherein the at least one wireless transmitter (15, 16, 17) comprises one or more of:
- an audio transmitter (15), such as a speaker arranged for sending an audio signal (S1);
- a light transmitter (16), such as an LED for sending a visible light signal (S2); and
- a digital communication transmitter (17), such as a phone transmitter, a Bluetooth transmitter, a Wifi transmitter, a microwave transmitter, or a radio transmitter, for sending a non-visible electromagnetic signal (S3).

3. The adapter according to claim 1 or 2, wherein the processing unit is arranged for analysing the received information comprising at least one of a value of a temperature, a value of a ground fault, a value of a leakage current, a value of detected gas such as hydrogen, and wherein the processing unit is arranged so that when at least one of these values exceeds a corresponding predetermined threshold the at least one wireless transmitter (15, 16, 17) is instructed to send the at least one signal (S1, S2, S3).

4. The adapter according to at least claim 3, comprising a digital display arranged to display a warning text or at least one value based on the received information, such as battery temperature.

5. The adapter according to any one of claims 1-4, wherein the adapter is arranged for processing the information live.

6. The adapter according to any one of claims 1-4 wherein the adapter is arranged for relaying a warning signal (S0) of a battery management portion of the vehicle by instructing the at least one wireless transmitter (15, 16, 17) to send the at least one signal (S1, S2, S3) in response to receiving the warning signal (S0).

7. The adapter according to any one of the preceding claims 1-6, wherein the adapter is arranged to leach electrical energy from the vehicle or station for powering the processing unit and wireless transmitter.

8. The adapter according to any one of the preceding claims 1-7, wherein the adapter comprises an electrical power source, such as a battery, for powering the processing unit and the at least one wireless transmitter.

9. The adapter according to any one of the preceding claims 1-8, wherein the first portion is defined at a first distal end of the body, wherein the second portion is defined at a second distal end of the body, and wherein the body comprises a handle, such as with a grip, extending between the first portion and the second portion.

10. The adapter according to claim 8, wherein the at least one wireless transmitter (15, 16, 17) comprises a light transmitter for sending a visible light signal (S2), and wherein said light transmitter is furnished at the handle.

11. The adapter according to any one of the preceding claims 1-10, wherein (i) the adapter comprises a digital communication transmitter (17) for wirelessly communicating with a monitoring device for allowing a user to be alerted when the processing unit determines the information to be indicative of a predefined battery malfunction
and/or
wherein (ii) the adapter comprises an OBD, such as an OBD-II, connector through which the communicative connection is to be established.

12. A system (100) for charging an electric vehicle comprising:
- an electric charging station (7);
- a charging cable (5) for connecting said charging station (7), to an electric vehicle (11), wherein the cable comprises a head for connecting to a charging port (9) of said electric vehicle;
- the adapter according to any one of claims 1-10, wherein the adapter is connected to the head (3) of said charging cable (5) with the first connector portion (2.1).

13. The system according to claim 12, wherein the system further comprises:
- a distant monitoring device, such as a computer, tablet, or phone, wherein the adapter comprises a digital communication transmitter (17) for wirelessly communicating with said distant monitoring device, such as comprising a human interface, wherein the monitoring device is arranged so as to alert the user via the human interface when the processing unit determines the information to be indicative of a predefined battery malfunction.

14. The system according to claim 12 or 13, wherein the system comprises:
- a response portion for deploying a safety measure in response to the at least one signal.

15. An arrangement (1') for monitoring the battery (BAT) of an electric vehicle (11) at a charging station (7), **characterized in that** the arrangement comprises:
- a processing unit (13) arranged for communicating with the vehicle (11) over a communicative connection for receiving in-formation (î) about the battery of the vehicle, and wherein the arrangement (1') comprises at least one wireless transmitter (15, 16, 17) arranged for transmitting at least one signal (S1, S2, S3) in response to the processing unit determining the information to be indicative of a predefined battery malfunction, and wherein the arrangement is integrated with the charging cable, or the charging station.
